# EUROPEAN PATENT APPLICATION

(11) **EP 3 132 961 A2**
(43) Date of publication of application: **22.02.2017**
(21) Application number: 16181617.8
(22) Date of filing: 28.07.2016
(51) Int. Cl.: B60K 6/48

(54) **POWER UNIT FOR A HYBRID ELECTRIC VEHICLE**

(30) Priority: 28.07.2015 GB 201513257
(71) Applicant: Wright-EN-Drive Limited, Antrim, County Antrim BT41 2DU (GB)
(72) Inventor: Ainsworth, Paul, Antrim, County Antrim BT41 2DU (GB)
(74) Representative: Waller, Stephen

(57) **Abstract**

A power unit for a hybrid electric vehicle comprising an internal combustion engine coupled to a gearbox, the gearbox having an output shaft with an axis of rotation, a first rotary device mounted on a first side of the axis of rotation of the output shaft, a second rotary device mounted on a second side of the axis of rotation of the output shaft, opposite said first side, each of said first and second rotary devices having a respective rotor shaft disposed parallel to the output shaft of the gearbox and being mechanically coupled to said output shaft for transmitting torque between the respective rotor shaft and the output shaft, wherein said first and second rotary devices are arranged substantially symmetrically about a plane aligned with the axis of rotation of the output shaft of the gearbox.

## Description

### FIELD OF THE INVENTION

This invention relates to a power unit for a hybrid electric vehicle, in particular a commercial vehicle, such as a bus.

### BACKGROUND OF THE INVENTION

Hybrid Electric Vehicles (HEVs) combines a conventional internal combustion engine propulsion system with an electric propulsion system. Typically HEVs use their internal combustion engine to drive an electrical generator, generating electricity to either recharge batteries or to directly power one or more electric drive motors. HEVs typically make use of efficiency-improving technologies such as regenerative brakes, whereby a vehicle's kinetic energy is converted into electric energy by driving an electrical generator, rather than wasting it as heat energy as conventional brakes do. It is also known to reduce vehicle emissions by shutting down the internal combustion engine at idle and restarting it when needed. This is known as a start-stop system. Often the electrical generator is also used as a motor to start and/or drive the internal combustion engine, as a starter motor and/or to supplement the power supplied by the internal combustion engine. This type of generator is typically referred to as a motor generator.

Particularly in lower voltage systems, such as 48 volt systems, the internal combustion engine drives the drive wheels of the vehicle via a gearbox and a motor generator is used to supplement the power supplied by the internal combustion engine, to start the engine and to generate electricity to charge the batteries, particularly during regenerative braking. This arrangement is often referred to as a "micro-hybrid" vehicle.

Typically such motor generators are driven from the output shaft of the internal combustion engine via a drive belt running around pulleys on the rotor shaft of the motor generator and on the output shaft of the internal combustion engine, said drive belt also typically driving other ancillary components, such as power steering and air conditioning pumps. This allows the motor generator to spin faster than the output shaft of the internal combustion engine by the use of suitably sized pulleys.

However, such drive belts can require complex tensioning arrangements required to allow the motor generator to both drive and be driven by the internal combustion engine, whereby the tension on either side of the drive belt varies. Also, such motor generators, particularly where large output devices are used, require considerable belt tension to prevent belt slippage under load. This can place excessive lateral loadings on the output shaft of the engine.

Typically the crankshaft of an internal combustion engine runs on plain bearings which rely on engine oil pressure to avoid metal on metal contact. Such bearings are extremely intolerant to loadings extending parallel to the join line of the two halves of the bearing, typically arranged in a horizontal plane to the usual vertical alignment of the cylinders of the internal combustion engine. This is a particular problem during engine start up when the oil pressure may be low. However, space requirement typically dictate that the motor generator be laterally spaced to one side of the output shaft of the engine, thus limiting the size of the motor generator that may be used.

This is not such a problem in small automobiles, with relatively small output petrol engines and correspondingly small output motor generators. However, in commercial vehicles where larger diesel engines are typically used the size requirements of the motor generator and thus the belt tension required to prevent slippage can lead to the imposition of excessive lateral forces on the output shaft of the internal combustion engine.

An object of the present invention is to provide a power unit for a hybrid electric vehicle, in particular a commercial vehicle such as a bus, that overcomes the abovementioned problem.

### SUMMARY OF THE INVENTION

According to the present invention there is provided a power unit for a hybrid electric vehicle comprising an internal combustion engine coupled to a gearbox, the gearbox having an output shaft with an axis of rotation, a first rotary device mounted on a first side of the axis of rotation of the output shaft, a second rotary device mounted on a second side of the axis of rotation of the output shaft, opposite said first side, each of said first and second rotary devices having a respective rotor shaft disposed parallel to the output shaft of the gearbox and being mechanically coupled to said output shaft for transmitting torque between the respective rotor shaft and the output shaft, wherein said first and second rotary devices are arranged substantially symmetrically about a plane aligned with the axis of rotation of the output shaft of the gearbox.

Preferably the rotor shaft of each of said first and second rotary devices is coupled to the output shaft of said internal combustion engine by a respective endless member. Each endless member may include a respective tensioning device. In a preferred embodiment the rotor shafts of the first and second rotary devices are located in a plane located vertically offset from the axis of rotation of the output shaft of the gearbox, each tensioning device comprising an idler roller or gear acting the respective endless member whereby the upper and lower runs of each endless member extend from the output shaft at the same angle to a horizontal plane passing through the rotational axis of the output shaft, thus balancing the forces applied to the output shaft both laterally and vertically.

In a preferred embodiment each endless member comprises a belt.

Said endless members may be axially offset from one another with respect to the rotational axis of the output shaft and are coupled to the output shaft via a common pulley.

In a preferred embodiment said first and second rotary devices are each located beside the gearbox, said rotary device being located on either side of the gearbox.

Said first and second rotary devices may be mounted on a common sub-frame coupled to the gearbox to prevent the transfer of loads from the rotary devices to the gearbox housing. Alternatively it is envisaged that the first and second rotary devices may be mounted on a housing of the gearbox.

At least one of said first and second rotary devices comprises a motor generator. In a preferred embodiment both of said first and second rotary devices comprise motor generators.

Said internal combustion engine may comprise a diesel engine.

Said gearbox may comprise an automatic gearbox coupled to the internal combustion engine via a torque converter.

According to a further aspect of the present invention there is provided a commercial vehicle incorporating a power unit in accordance with the first aspect of the invention. Preferably said vehicle comprises a bus.

### BRIEF DESCRIPTION OF THE DRAWINGS

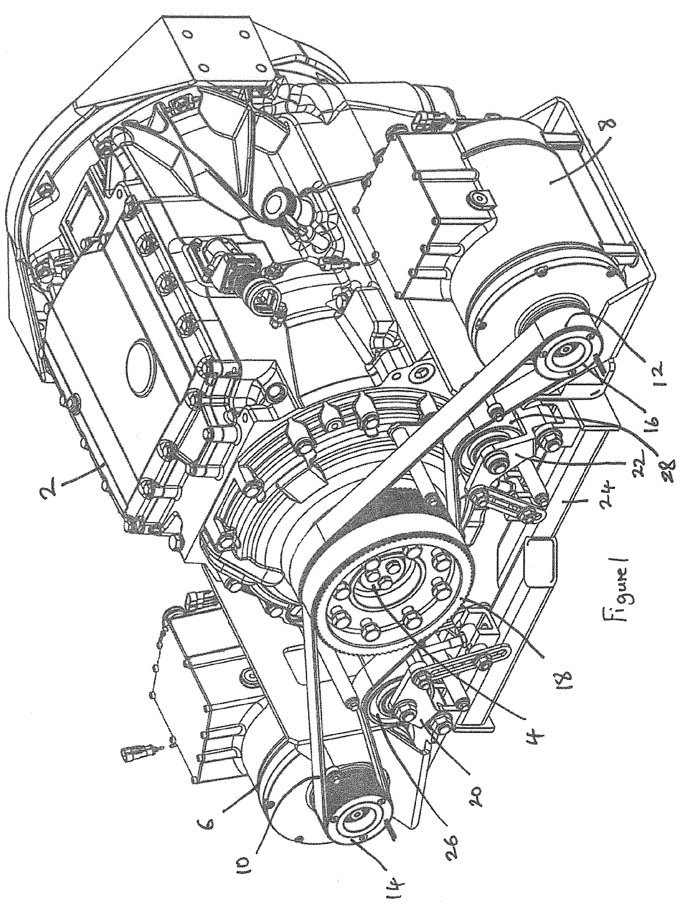

A power unit for a hybrid electric commercial vehicle, in particular a bus, will now be described by way of example only, with reference to the accompanying drawings, in which :-
Figure 1 is a perspective view of a power unit for a hybrid electric commercial vehicle in accordance with a first embodiment of the present invention; and

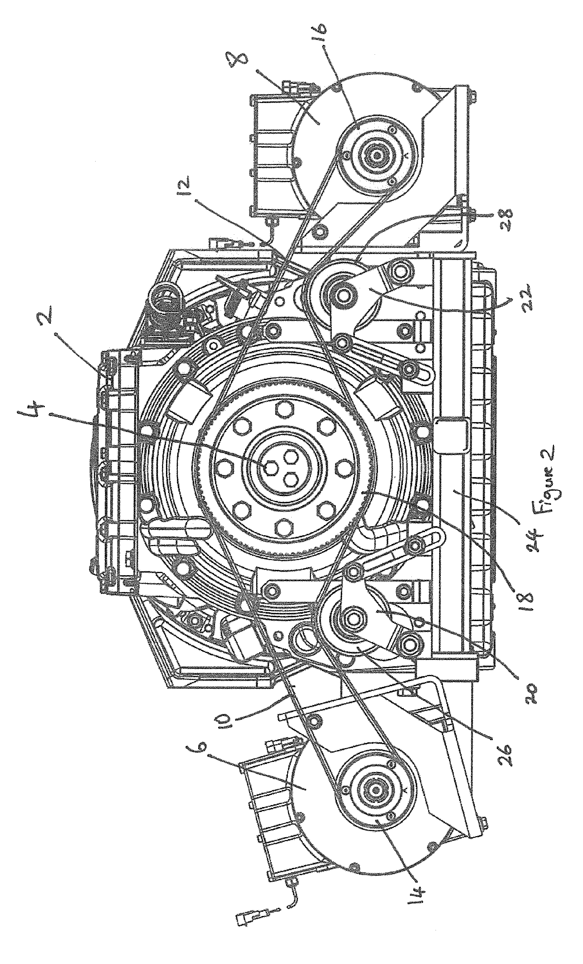

Figure 2 is an end view of the power unit of Figure 1.

### DETAILED DESCRIPTION OF THE DRAWINGS

As shown in the drawings, a power unit for a hybrid electric commercial vehicle in accordance with an embodiment of the present invention comprises an internal combustion engine, typically a diesel engine, drivingly coupled to a gearbox 2 via a clutch or a torque converter, an output shaft 4 of the gearbox 2 being coupled to drive wheels of the vehicle via a propeller shaft (not shown).

A pair of motor generators 6,8 adapted both for generating electricity and for driving the vehicle are coupled to the output shaft 4 of the gearbox 2 whereby the motor generators 6,8 may be driven by the output shaft 4 for generating electricity or may drive the output shaft 4 to provide power to the driving wheels of the vehicle. By coupling the motor generators to the output shaft 4 of the gearbox 2 rather than to the crankshaft of the engine the transfer of load from the motor generators 6,8 to the driving wheels of the vehicle through the torque converter and gearbox is avoided, reducing power losses and maximising the efficiency of the motor generators 6,8 when used to drive the vehicle and/or supplement the power of the internal combustion engine.

The internal combustion engine may comprise a four cylinder diesel engine of around 4 litre capacity, for example for use in a commercial vehicle, more particularly a lightweight bus, such as the Wrightbus StreetLite 40 seat range. However, other engine configurations and sizes, fuelled by diesel, petrol or Ipg, for numerous other applications, are envisaged.

The gearbox 2 will typically be an automatic gearbox coupled to the engine via a torque converter, as commonly used in lightweight buses. However, it is also envisaged that the gearbox may comprise a manual gearbox coupled to the engine via a clutch.

The lightweight bus market is becoming increasingly popular due to flexibility and low running costs compared to a large double deck bus. By incorporating hybrid electric technology, lightweight diesel buses can achieve low carbon emission bus accreditation, often required for city centre use. In what is often referred to as a "micro-hybrid", the internal combustion engine is coupled to a motor generator which charges the batteries during braking to power auxiliaries, delivering a significant fuel saving, while acting as a starter motor for engine starting, facilitating the use of stop start technology, and supplementing the power of the internal combustion engine when required, for example to mitigate turbo lag, without the extra costs associated with a full hybrid vehicle's complexity and batteries (i.e. where electric motors drive the vehicle and the internal combustion engine is used solely to charge batteries).

However, as discussed above, the use of a single relatively large motor generator coupled to the crankshaft of the internal combustion engine by a belt drive can place an excessive lateral load on the bearings of the crankshaft.

The power unit in accordance with the present invention solves this problem by utilising two smaller motor generators 6,8 instead of one larger motor generator and by locating the two motor generators 6,8 symmetrically on either side of the gearbox, preferably alongside the gearbox on either side thereof, and coupling the motor generators 6,8 to the output shaft 4 of the gearbox 2 of the internal combustion engine.

The motor generators 6,8 may be driven by respective drive belts 10,12 and thus the lateral forces applied to the output shaft 4 of the internal combustion engine by the two motor generators 6,8 are substantially balanced. Each drive belt 10,12 passes around a respective pulley 14,16 mounted on the rotor shaft 18,20 of the respective motor generator 6,8 and a pulley 18 mounted on the output shaft 4 of the gearbox 2. The drive belts 10,12, and preferably also the motor generators 6,8, are axially offset with respect to the axis of rotation of the engine so that the drive belts 10,12 can be arranged side by side on the pulley 18.

Polymeric drive belts are preferred because the elasticity of the belts effectively vibrationally isolates the motor generators 6,8 from the gearbox 2. The polymeric drive belts also cope better with the torque reversal caused when the motor generators switch from generating electricity to driving the vehicle. However, it is envisaged that other drive means may be used for transferring drive between the motor generators and the engine, for example chains and sprockets or gearing or hydraulic motors/pumps.

As shown in the drawings, in a preferred embodiment each motor generator 6,8 is mounted on a sub-frame 24 coupled to the gearbox 2 such that the motor generators 6,8 are mounted beside and on either side of the gearbox. This provides a particularly compact arrangement and minimises any loads applied to the gearbox castings while ensuring that the alignment between the motor generators 6,8 is maintained to maintain tension and alignment of the belts 10,12.

Tensioning devices 20,22 are provided for tensioning each belt 10,12. In the embodiment shown each tensioning device comprises a pivotally mounted idler roller 26,28 engaging a lower side of each respective belt 10,12, the angular position of each idler roller 26,28 being set by an adjustable length link extending between the sub-frame 24 and the respective idler roller 26,28. The length of the adjustable length link of each tensioning device 20,22 may be manually adjusted to adjust the tension applied to each belt 10,12 by the respective idler roller 26,28.

In an alternative embodiment (not shown) each tensioning device 20,22 may be automatically adjusted by suitable biasing means, such as a spring or by oil pressure, although such arrangement may be less suitable for coping with the torque reversal applied to the belts when the motor generators 6,8 switch from electricity generation to drive modes.

In a further embodiment (not shown) the tensioning devices may be mechanically linked to equalise the tension applied to each belt. By coupling the two motor generators 6,8 in this way, the tension on the drive belts 10,12 may be balanced/equalised, thus minimising any resultant lateral loading on the output shaft 4 of the gearbox 2.

In the embodiment shown in the drawings, the rotor shafts of the motor generators 6,8 are located in a plane located slightly below the axis of rotation of the output shaft 4 of the gearbox 2 in order to minimise the height of the assembly. This would normally have the disadvantage of placing a resultant radial loading on the output shaft in a downwards direction. In order to avoid this, the idler roller 26,28 of each tensioning device 20,22 is positioned to counter this resultant radial loading, by ensuring that the upper and lower runs of each belt 10,12 extend away from the pulley 18 at the same angle to the horizontal, in directions aligned with a respective common point on a horizontal axis passing through the rotational axis of the output shaft 4. The idler rollers 26,28 are located symmetrically on either side of a vertical axis passing through the rotational axis of the output shaft 4.

Alternatively, it is envisaged that the rotor shafts of the motor generators 6,8 may be aligned with the output shaft 4 of the gearbox 2 in a substantially horizontal plane.

While the invention has been described in relation to the use of paired motor generators, it is envisaged that other rotary machine may be provided in place of one or both of the motor generators, for example hydraulic machines, such as fluid pumps and/or hydraulic motors.

By coupling the motor generators 6,8 to the gearbox 2 in this way, on either side of the gearbox using drive belts 10,12, the motor generators 6,8 can be readily used for starting the engine (in start/top functionality), boosting engine power to drive the drive wheels when required, regenerative braking and efficient electricity generation for battery charging and powering ancillary components of the vehicle in which the power unit is installed, without placing excessive lateral loading on the output shaft 4 of the internal combustion engine 2 and thus enabling the implementation of hybrid electric vehicle technology without substantial modification to the internal combustion engine or the vehicle.

The invention is not limited to the embodiment(s) described herein but can be amended or modified without departing from the scope of the present invention.

## Claims

1. A power unit for a hybrid electric vehicle comprising an internal combustion engine coupled to a gearbox, the gearbox having an output shaft with an axis of rotation, a first rotary device mounted on a first side of the axis of rotation of the output shaft, a second rotary device mounted on a second side of the axis of rotation of the output shaft, opposite said first side, each of said first and second rotary devices having a respective rotor shaft disposed parallel to the output shaft of the gearbox and being mechanically coupled to said output shaft for transmitting torque between the respective rotor shaft and the output shaft, wherein said first and second rotary devices are arranged substantially symmetrically about a plane aligned with the axis of rotation of the output shaft of the gearbox.

2. A power unit as claimed in claim 1, wherein the rotor shaft of each of said first and second rotary devices is coupled to the output shaft of said internal combustion engine by a respective endless member.

3. A power unit as claimed in claim 2, wherein each endless member includes a respective tensioning device.

4. A power unit as claimed in claim 3, wherein the rotor shafts of the first and second rotary devices are located in a plane located vertically offset from the axis of rotation of the output shaft of the gearbox, each tensioning device comprising an idler roller or gear acting on the respective endless member whereby the upper and lower runs of each endless member extend from the output shaft at the same angle to a horizontal plane passing through the rotational axis of the output shaft, thus balancing the forces applied to the output shaft both laterally and vertically.

5. A power unit as claimed in any of claims 2 to 4, wherein each endless member comprises a belt.

6. A power unit as claimed in any of claims 2 to 5, wherein said endless members are axially offset from one another with respect to the rotational axis of the output shaft and are coupled to the output shaft via a common pulley.

7. A power unit as claimed in any preceding claim, wherein said first and second rotary devices are each located beside the gearbox, said rotary device being located on either side of the gearbox.

8. A power unit as claimed in any preceding claim wherein said first and second rotary devices are mounted on a common sub-frame coupled to the gearbox.

9. A power unit as claimed in any of claims 1 to 7, wherein said first and second rotary devices are mounted on a housing of the gearbox.

10. A power unit as claimed in any preceding claim, wherein at least one of said first and second rotary devices comprises a motor generator.

11. A power unit as claimed in claim 10, wherein both of said first and second rotary devices comprise motor generators.

12. A power unit as claimed in any preceding claim, wherein said internal combustion engine comprises a diesel engine.

13. A power unit as claimed in any preceding claim, wherein said gearbox comprises an automatic gearbox coupled to the internal combustion engine via a torque converter.

14. A commercial vehicle incorporating a power unit as claimed in any preceding claim.

15. A commercial vehicle as claimed in claim 14, wherein said vehicle comprises a bus.
